# EUROPEAN PATENT APPLICATION

(11) **EP 4 842 040 A1**
(43) Date of publication of application: **18.11.2026**
(21) Application number: 24916094.6
(22) Date of filing: 12.01.2024
(51) Int. Cl.: H04W 24/04

(54) **COMMUNICATION METHOD AND DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2024/072095
(87) International publication number: WO 2025/148030

(57) **Abstract**

The embodiments of the present disclosure relate to the technical field of communications and provide a communication method and device, and a storage medium. The method is applied to an STA and comprises: determining a first radio frame, wherein the first radio frame comprises a first information domain, and the first information domain is used for indicating that the STA has in-device coexistence interference; and sending the first radio frame. Embodiments of the present disclosure provide a way to indicate that an STA has in-device coexistence interference.

## Description

### FIELD

The present disclosure relates to the field of communication technology, and particularly to a communication method, a device and a storage medium.

### BACKGROUND

With the development of wireless communication technologies, an integration level of wireless devices is getting increasingly higher. A single wireless device often supports a plurality of wireless communication protocols, integrates a plurality of wireless communication modules, and simultaneously accesses a plurality of wireless networks, such as wireless local area networks (WLAN), long term evolution (LTE), Bluetooth (BT) and global navigation satellite system (GNSS) and the like. A plurality of communication modes operating simultaneously may interfere with each other, leading to communication failure or performance degradation.

### SUMMARY

Embodiments of the present disclosure provides a communication method, a device and a storage medium, which indicate that a station (STA) is subject to in-device coexistence interference.

In a first aspect, embodiments of the present disclosure provide a communication method. The method is applied to an STA, and includes:
determining a first frame, in which the first frame includes a first information field, and the first information field indicates that the STA is subject to in-device coexistence interference; and
sending the first frame.

In a second aspect, embodiments of the present disclosure provide a communication method. The method is applied to an access point (AP), and includes:
receiving a first frame, in which the first frame includes a first information field, and the first information field indicates that an STA is subject to in-device coexistence interference.

In a third aspect, embodiments of the present disclosure provide an STA. The STA includes:
a processing module configured to determine a first frame, in which the first frame includes a first information field, and the first information field indicates that the STA is subject to in-device coexistence interference; and
a transceiver module configured to send the first frame.

In a fourth aspect, embodiments of the present disclosure provide an AP. The AP includes:
a transceiver module configured to receive a first frame, in which the first frame includes a first information field, and the first information field indicates that a STA is subject to in-device coexistence interference.

In a fifth aspect, embodiments of the present disclosure provide an STA. The STA includes: one or more processors,
in which the STA is configured to perform the communication method provided in the first aspect of embodiments of the present disclosure.

In a sixth aspect, embodiments of the present disclosure provide an AP. The AP includes: one or more processors,
in which the AP is configured to perform the communication method provided in the second aspect of embodiments of the present disclosure.

In a seventh aspect, embodiments of the present disclosure provide a storage medium storing instructions that, when executed on a communication device, cause the communication device to perform the communication method provided in the first aspect of embodiments of the present disclosure.

In an eighth aspect, embodiments of the present disclosure provide a communication system. The system includes an STA and an AP. The STA is configured to perform the method described in the first aspect. The AP is configured to perform the method described in the second aspect.

Based on the communication method, device and storage medium provided in embodiments of the present disclosure, the STA may indicate to the AP via the first frame that the STA is subject to the in-device coexistence interference.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

In order to more clearly illustrate embodiments of the present disclosure or technical solutions in the related art, embodiments or accompanying drawings needed to use in the related technical description will be introduced clearly below. Apparently, the accompanying drawings described below are only a part of embodiments of the present disclosure. For the ordinary skilled in the art, other drawings may further be obtained based on these accompanying drawings without creative work.
FIG. 1 is a schematic diagram illustrating an architecture of a communication system according to embodiments of the present disclosure.
FIG. 2 is an interactive schematic diagram illustrating a communication method according to embodiments of the present disclosure.
FIG. 3 is a first schematic flowchart illustrating a communication method according to embodiments of the present disclosure.
FIG. 4 is a second schematic flowchart illustrating a communication method according to embodiments of the present disclosure.
FIG. 5 is a third schematic flowchart illustrating a communication method according to embodiments of the present disclosure.
FIG. 6 is a fourth schematic flowchart illustrating a communication method according to embodiments of the present disclosure.
FIG. 7 is a block diagram illustrating an STA provided in embodiments of the present disclosure.
FIG. 8 is a block diagram illustrating an AP provided in embodiments of the present disclosure.
FIG. 9 is a block diagram illustrating a communication device provided in embodiments of the present disclosure.
FIG. 10 is a block diagram illustrating a chip provided in embodiments of the present disclosure.

### DETAILED DESCRIPTION

Embodiments of the present disclosure provide a communication method, a device and a storage medium.

In a first aspect, embodiments of the present disclosure provide a communication method. The method is applied to a station (STA) and includes:
determining a first frame, in which the first frame includes a first information field, and the first information field indicates that the STA is subject to in-device coexistence interference; and
sending the first frame.

In the above embodiment, by sending the first frame, the STA enables an access point (AP) to quickly determine that the STA is subject to the in-device coexistence interference, which facilitates the AP to timely learn a relevant state of the in-device coexistence interference of the STA.

In combination with some embodiments of the first aspect, in some embodiments, the first frame further includes a second information field, and the second information field indicates a resource unit (RU) where the STA is subject to the in-device coexistence interference.

In the above embodiment, by sending the first frame, the STA enables the AP to quickly determine the RU where the STA is subject to the in-device coexistence interference, which facilitates the AP to further timely learn relevant information of the in-device coexistence interference of the STA.

In combination with some embodiments of the first aspect, in some embodiments, the first frame includes a channel usage element, the channel usage element includes a usage mode field, and in a case where an identifier value of the usage mode field is a first value, the usage mode field serves as the first information field, and the first value indicates that the STA is subject to the in-device coexistence interference.

In the above embodiment, the STA may reuse an existing information field to indicate that the STA is subject to the in-device coexistence interference, which is beneficial to saving a signaling resource.

In combination with some embodiments of the first aspect, in some embodiments, the second information field includes at least one target wake time (TWT) element, and each of the at least one TWT element includes at least one of:
a first sub-information field, in which the first sub-information field indicates a first RU where the STA is subject to the in-device coexistence interference within a TWT service period (SP) corresponding to a respective TWT element; or
a second sub-information field, in which the second sub-information field indicates that the first RU is in an unavailability mode within the TWT SP corresponding to a respective TWT element.

In the above embodiment, the first frame may indicate, through the first sub-information field in one TWT element, the RU where the STA is subject to the in-device coexistence interference within one TWT SP, and/or, indicate, through the first sub-information field in one TWT element, that the RU where the STA is subject to the in-device coexistence interference within one TWT SP is in the unavailability mode, which facilitates the AP to quickly determine an RU where the STA is subject to the in-device coexistence interference in each TWT SP, thereby avoiding interference to the communication between the STA and the AP.

In combination with some embodiments of the first aspect, in some embodiments, each of the at least one TWT element includes an individual TWT parameter set field and a control field, the individual TWT parameter set field includes the first sub-information field, and the control field includes the second sub-information field.

In the above embodiment, the first sub-information field and the second sub-information field may be located in an information field of an existing TWT element, which is beneficial to saving a signaling resource.

In combination with some embodiments of the first aspect, in some embodiments, the method further includes:
receiving a second frame, in which the second frame is used to respond to the first frame.

In the above embodiment, the second frame may be used to respond to the first frame, which is beneficial for the STA to confirm that the AP has learned an indication content of the first frame, and is beneficial to an indication process of information related to the in-device coexistence interference.

In combination with some embodiments of the first aspect, in some embodiments, the method further includes:
determining a second RU allocated by an AP, and communicating with the AP according to the second RU,
in which the second RU allocated by the AP within the TWT SP corresponding to one of the at least one TWT element is different from the first RU indicated by the first sub-information field in the one TWT element.

In the above embodiments, the RU allocated by the AP within each TWT SP is different from the RU where the STA is subject to the in-device coexistence interference within the same TWT SP, such that in a case where the AP communicates with the STA according to the RU allocated by the AP, interference from in-device coexistence activities of the STA may be avoided, which is beneficial to improving communication efficiency.

In combination with some embodiments of the first aspect, in some embodiments, the first frame is a probe request frame, an association request frame or a re-association request frame.

In the above embodiments, the first frame may reuse existing frames, which is beneficial to saving the signaling resource and improving an information indication efficiency.

In combination with some embodiments of the first aspect, in some embodiments, the second frame is a probe response frame, an association response frame or a re-association response frame.

In the above embodiments, the second frame may reuse existing frames, which is beneficial to saving the signaling resource and improving an information indication efficiency.

In a second aspect, embodiments of the present disclosure provide a communication method. The method is applied to an AP, and includes:
receiving a first frame, in which the first frame includes a first information field, and the first information field indicates that an STA is subject to in-device coexistence interference.

In the above embodiments, the AP may quickly determine that the STA is subject to the in-device coexistence interference through the first frame, facilitating the AP to timely learn a relevant state of the in-device coexistence interference of the STA.

In combination with some embodiments of the second aspect, in some embodiments, the first frame further includes a second information field, and the second information field indicates a RU where the STA is subject to the in-device coexistence interference.

In the above embodiments, the AP may quickly determine the RU where the STA is subject to the in-device coexistence interference through the first frame, facilitating the AP to further timely learn a relevant state of the in-device coexistence interference of the STA.

In combination with some embodiments of the second aspect, in some embodiments, the first frame includes a channel usage element, the channel usage element includes a usage mode field, and in a case where an identifier value of the usage mode field is a first value, the usage mode field serves as the first information field, and the first value indicates that the STA is subject to the in-device coexistence interference.

In the above embodiment, the STA may reuse an existing information field to indicate that the STA is subject to the in-device coexistence interference, which is beneficial to saving a signaling resource.

In combination with some embodiments of the second aspect, in some embodiments, the second information field includes at least one TWT element, and each of the at least one TWT element includes at least one of:
a first sub-information field, in which the first sub-information field indicates a first RU where the STA is subject to the in-device coexistence interference within a TWT SP corresponding to a respective TWT element; or
a second sub-information field, in which the second sub-information field indicates that the first RU is in an unavailability mode within the TWT SP corresponding to a respective TWT element.

In the above embodiment, the first frame may indicate, through the first sub-information field in one TWT element, the RU where the STA is subject to the in-device coexistence interference within one TWT SP, and/or, indicate, through the first sub-information field in one TWT element, that the RU where the STA is subject to the in-device coexistence interference within one TWT SP is in the unavailability mode, which facilitates the AP to quickly determine an RU where the STA is subject to the in-device coexistence interference in each TWT SP, avoiding interference to the communication between the STA and the AP.

In combination with some embodiments of the second aspect, in some embodiments, each of the at least one TWT element includes an individual TWT parameter set field and a control field, the individual TWT parameter set field includes the first sub-information field, and the control field includes the second sub-information field.

In the above embodiment, the first sub-information field and the second sub-information field may be located in an information field of an existing TWT element, which is beneficial to saving a signaling resource.

In combination with some embodiments of the second aspect, in some embodiments, the method further includes:
sending a second frame, in which the second frame is used to respond to the first frame.

In the above embodiment, the second frame may be used to respond to the first frame, which is beneficial for the STA to confirm that the AP has learned an indication content of the first frame, and is beneficial to an indication process of information related to the in-device coexistence interference.

In combination with some embodiments of the second aspect, in some embodiments, the method further includes:
determining a second RU allocated by an access point (AP), and communicating with the AP according to the second RU,
in which the second RU allocated by the AP within the TWT SP corresponding to one of the at least one TWT element is different from the first RU indicated by the first sub-information field in the one TWT element.

In the above embodiments, the RU allocated by the AP within each TWT SP is different from the RU where the STA is subject to the in-device coexistence interference within the same TWT SP, such that in a case where the AP communicates with the STA according to the RU allocated by the AP, interference from an in-device coexistence activity of the STA may be avoided, which is beneficial to improving communication efficiency.

In combination with some embodiments of the second aspect, in some embodiments, the first frame is a probe request frame, an association request frame or a re-association request frame.

In the above embodiments, the first frame may reuse existing frames, which is beneficial to saving the signaling resource and improving an information indication efficiency.

In combination with some embodiments of the second aspect, in some embodiments, the second frame is a probe response frame, an association response frame or a re-association response frame.

In the above embodiments, the second frame may reuse existing frames, which is beneficial to saving the signaling resource and improving an information indication efficiency.

In a third aspect, embodiments of the present disclosure provide an STA. The STA includes:
a processing module configured to determine a first frame, in which the first frame includes a first information field, and the first information field indicates that the STA is subject to in-device coexistence interference; and
a transceiver module configured to send the first frame.

In a fourth aspect, embodiments of the present disclosure provide an AP. The AP includes:
a transceiver module configured to receive a first frame, in which the first frame includes a first information field, and the first information field indicates that an STA is subject to in-device coexistence interference.

In a fifth aspect, embodiments of the present disclosure provide an STA. The STA includes: one or more processors,
in which the STA is configured to perform the communication method provided in the first aspect and the optional implementations of the first aspect.

In a sixth aspect, embodiments of the present disclosure provide an AP. The AP includes: one or more processors,
in which the AP is configured to perform the communication method provided in the second aspect and the optional implementations of the second aspect.

In a seventh aspect, embodiments of the present disclosure provide a communication device. The communication device includes:
one or more processors,
in which the communication device served as the STA is configured to perform the communication method provided in the first aspect and the optional implementations of the first aspect, or the communication device served as the AP is configured to perform the communication method provided in the second aspect and the optional implementations of the second aspect.

In an eighth aspect, embodiments of the present disclosure provide a storage medium storing instructions that, when executed on a communication device, cause the communication device to perform the communication methods described in the first aspect, the second aspect, the optional implementations of the first aspect, and the optional implementations of the second aspect.

In a ninth aspect, embodiments of the present disclosure provide a program product, which when executed by a communication device, causes the communication device to perform the methods described in the first aspect, the second aspect, the optional implementations of the first aspect, and the optional implementations of the second aspect.

In a tenth aspect, embodiments of the present disclosure provide a computer program which, when run on a computer, causes the computer to perform the methods described in the first aspect, the second aspect, the optional implementations of the first aspect, and the optional implementations of the second aspect.

In an eleventh aspect, embodiments of the present disclosure provide a chip or a chip system. The chip or chip system includes a processing circuit configured to execute the methods described in the first aspect, the second aspect, the optional implementations of the first aspect, and the optional implementations of the second aspect.

In a twelfth aspect, embodiments of the present disclosure provide a communication system. The method includes an STA and an AP, in which the STA is configured to perform the method described in the first aspect and the optional implementations of the first aspect, and the AP is configured to perform the method described in the second aspect and the optional implementations of the second aspect.

It may be understood that the above STA, AP, communication system, communication device, storage medium, program product, computer program, chip or chip system are all used to perform the method in embodiments of the present disclosure. Therefore, for beneficial effects that they may be achieved, reference may made to beneficial effects in the corresponding method, which will not be repeated here.

Embodiments of the present disclosure provide a communication method, a device and a storage medium. In some embodiments, terms such as communication method and method for processing information may be used interchangeably; terms such as communication device and apparatus for processing information may be used interchangeably; terms such as system for processing information and communication system may be used interchangeably.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, if there are no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like.

In embodiments of the present disclosure, "a plurality of" refers to two or more.

In some embodiments, terms such as "at least one of", "one or more", "a plurality of", "multiple", may be replaced with each other.

In some embodiments of the present disclosure, descriptions such as "at least one of A or B", "A and/or B", "A in one case and B in another", "in response to one case A and in response to another case B" may include the following technical solutions depending on the situation: in some embodiments performing A (performing A regardless of B); in some embodiments performing B (performing B regardless of A); in some embodiments, performing one selected from A and B (performing A and B), ; in some embodiments, performing A and B (performing both A and B ). The same applies when there are more branches such as A, B, and C.

In some embodiments of the present disclosure, descriptions such as "A or B" may include the following technical solutions depending on the situation: in some embodiments performing A (performing A regardless of B); in some embodiments performing B (performing B regardless of A); in some embodiments, performing one selected from A and B (performing A and B). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "rank". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", "in case of" and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

With the development of wireless communication technologies, an integration level of wireless devices is getting increasingly higher. A single wireless device often supports a plurality of wireless communication protocols, integrates a plurality of wireless communication modules, and simultaneously accesses a plurality of wireless networks, such as wireless local area networks (WLAN), long term evolution (LTE), Bluetooth (BT) and global navigation satellite system (GNSS) and the like. A plurality of communication modes operating simultaneously may interfere with each other, leading to communication failure or performance degradation. In a case where communication frequency bands of different communication systems are adjacent, a sending operation of one communication system may interfere with a receiving operation of another system. For example, in a case where frequency bands of Wi-Fi are adjacent to those of LTE Band 40 and LTE Band 7, and a frequency component falls into an operating frequency band of the adjacent channel, it may cause communication interference between adjacent channels. Furthermore, in a case where a plurality of wireless communication modules coexist, a physical spacing between radio frequency (RF) modules of each communication module is relatively small. In a case where these modules operate simultaneously, mutual interference may occur in the communication between different communication systems, which affects transceiving of each communication module. Furthermore, with an increase of a bandwidth of a wireless communication system and continuous enrichment of the bandwidth, a problem of multi-radio communication interference within the device has become more severe, and reliability of data transmission between devices is reduced.

For example, in a case where a non-access point multi-link device (AP MLD) enables an enhanced multi-link single radio (EMLSR) link, an STA that operates on the EMLSR link and is affiliated to the non-AP MLD enters a monitoring operation mode and a mode of receiving an initial control frame sent by an AP MLD. In a case where the STA operating on the EMLSR link and affiliated to the non-AP MLD is subject to in-device coexistence activities, such as a peer-to-peer (P2P) communication or a BT communication, it may cause the EMLSR operation mode to fail to be enabled or cannot receive the initial control frame sent by the AP MLD, resulting in communication interruption or data packet loss. Alternatively, during the data communication between the STA and its associated AP, the in-device interference caused by the BT communication service existing in the STA or the communication existing on frequency bands such as LTE Band 40 and LTE Band 7 results in the loss of Wi-Fi data packets in the communication between the STA and the AP, or even communication interruption.

To solve the above problems, the technical solutions in embodiments of the present disclosure will be clearly and completely described below with reference to the accompanying drawings. Obviously, the described embodiments are only a part of the embodiments of the present disclosure, rather than all of them. Based on embodiments of the present disclosure, all other embodiments obtained by those skilled in the art without inventive work shall fall within the protection scope of the present disclosure.

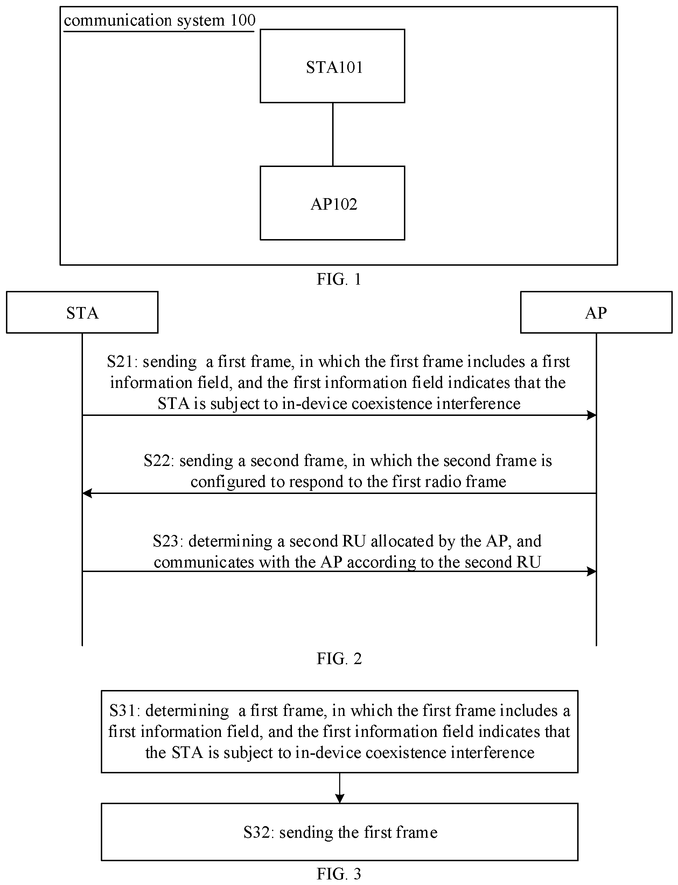

FIG. 1 is a schematic diagram illustrating an architecture of a communication system according to embodiments of the present disclosure.

As shown in FIG. 1, a communication system 100 includes an STA 101 and an AP 102.

The STA 101 may be a standalone STA, such as a non-EHT STA, or an affiliated STA of a Non-AP MLD. The AP 102 may be a standalone AP, such as a non-EHT AP, or an affiliated AP of an AP MLD, which is not limited in embodiments of the present disclosure.

In some embodiments, the STA 101 and the AP 102 may be a terminal or a network device equipped with a Wi-Fi chip.

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the body, which is not limited in embodiments of the present disclosure. Each body shown in FIG. 1 is an example, and the communication system may include all or some of the bodies shown in FIG. 1, or other bodies other than those shown in FIG. 1. The number and form of the bodies are arbitrary, each body may be physical or virtual, the connection relationship between the bodies is an example, the bodies may not be connected or connected, and the connection may be any form, including direct connection or indirect connection, wired connection or wireless connection.

Embodiments of the present disclosure may be applied to a wireless local area network (WLAN), such as may be applicable to the IEEE 802.11 system standards, such as the 802.11a/b/g standards, 802.11n standard, 802.11ac standard, 802.11ax standard, 802.11bf standard, 802.11be standard, or their next-generation standards, such as 802.11bn. Alternatively, embodiments of the present disclosure may also be applied to a wireless local area network system such as an Internet of Things (IoT) network or a vehicle to X (V2X) network. Of course, embodiments of the present disclosure may further be applied to other possible communication systems, for example, a long term evolution (LTE) system, an LTE frequency division duplex (FDD) system, an LTE time division duplex (TDD), a universal mobile telecommunications system (UMTS), a worldwide interoperability for microwave access (WiMAX) communication system, and a future 5th generation (5G) communication system.

FIG. 2 is an interactive schematic diagram illustrating a communication method according to embodiments of the present disclosure. As shown in FIG. 2, the communication method includes the following steps.

In step S21, an STA sends a first frame, in which the first frame includes a first information field, and the first information field indicates that the STA is subject to in-device coexistence interference.

In some embodiments, the first frame may include a first information field, and the first information field indicates that the STA is subject to the in-device coexistence interference.

In some embodiments, the first frame includes a channel usage element, the channel usage element includes a usage mode field, and in a case where an identifier value of the usage mode field is a first value, the usage mode field serves as the first information field, that is, in a case where the identifier value of the usage mode field is the first value, the usage mode field indicates that the STA is subject to the in-device coexistence interference.

As an example, an indication manner of the usage mode field may be shown in the following table:

| Value | Usage Mode |
|---|---|
| 0 | Noninfrastructure BSS |
| ... | ... |
| 4 | In-device Coexistence Activities |
| 5-254 | Reserved |
| 255 | Unknown request |

In a case where the identifier value of the usage mode field is 0, the usage mode field indicates a Noninfrastructure BSS wireless network mode; in a case where the identifier value of the usage mode field ranges from 5 to 254, the usage mode field is a reserved bit; in a case where the identifier value of the usage mode field is 255, the usage mode field indicates an unknown request. If the first value is 4, and the identifier value of the usage mode field is 4, the usage mode field indicates in-device coexistence activities, that is, indicates that the STA is subject to the in-device coexistence interference.

It should be particularly noted that the case where the first value is 4 is only used as an example. For example, the first value may also be any value in a range of 5 to 254, which is not limited in embodiments of the present disclosure.

In some embodiments, the first frame may further include a second information field, and the second information field indicates a resource unit (RU) where the STA is subject to the in-device coexistence interference, that is, indicates the RU where the STA performs the in-device coexistence activities.

For example, in a case where the first frame indicates via the first information field that the STA is subject to the in-device coexistence interference, the first frame further includes the second information field, which indicates the RU where the STA is subject to the in-device coexistence interference.

In some embodiments, the second information field may be a target wake time (TWT) element field.

In some embodiments, the second information field includes at least one TWT element, and each of the at least one TWT element corresponds to one TWT service period (SP).

Each of the at least one TWT element includes at least one of a first sub-information field and a second sub-information field.

The first sub-information field in each of the at least one TWT element indicates a first RU where the STA is subject to the in-device coexistence interference within a TWT SP corresponding to a respective TWT element, that is, indicates the first RU used by the STA in a case of performing the in-device coexistence activities within the TWT SP corresponding to the respective TWT element.

The second sub-information field in each of the at least one TWT element indicates that the first RU where the STA is subject to the in-device coexistence interference is in an unavailability mode within the TWT SP corresponding to a respective TWT element.

As an example, each of the at least one TWT element includes the first sub-information field, in which the first sub-information field indicates the first RU where the STA is subject to the in-device coexistence interference within the TWT SP corresponding to the respective TWT element.

As an example, each of the at least one TWT element includes the second sub-information field, in which the second sub-information field indicates that the first RU where the STA is subject to the in-device coexistence interference is in the unavailability mode within the TWT SP corresponding to the respective TWT element.

In some embodiments, the second information field includes at least one TWT element, each of the at least one TWT element includes an individual TWT parameter set field, and the individual TWT parameter set field includes the first sub-information field.

In an example, the first information field may be an RU index field.

In an example, the first information field may be a reserved bit in the individual TWT parameter set field, or may be shared with other information in the individual TWT parameter set field, for example, sharing a 1-byte length with a TWT channel field in the individual TWT parameter set field.

As an example, the format of the individual TWT parameter set field may be shown as follows:

| | | | | | |
|---|---|---|---|---|---|
| | Request Type | Target Wake Time | ... | TWT Channel/RU Index | .. |
| Octets: | 2 | 0 or 8 | | 1 | |

The individual TWT parameter set field includes the TWT channel field, and the first information (RU index) field shares a 1-byte length with the TWT channel field.

In some embodiments, the second information field includes at least one TWT element, each of the at least one TWT element includes a control field, and the control field includes the second sub-information field.

The content of the first frame is described below as an illustrative example with reference to specific examples.

The first frame includes the channel usage element, the channel usage element includes the usage mode field, and in a case where the identifier value of the usage mode field is the first value, the usage mode field serves as the first information field, that is, indicates that the STA is subject to the in-device coexistence interference.

The first frame includes the TWT element field, the TWT element field includes at least one TWT element, and each of the at least one TWT element includes the individual TWT parameter set field and the control field. The individual TWT parameter set field includes an RU index field that shares a 1-byte length with the TWT channel field, and the RU index field indicates the first RU where the STA is subject to the in-device coexistence interference within the TWT SP corresponding to the TWT element. The control field includes the second sub-information field, and the second sub-information field indicates that the first RU where the STA is subject to the in-device coexistence interference is in the unavailability mode within the TWT SP corresponding to the TWT element.

In some embodiments, the first frame may be a probe request frame, an association request frame, or a reassociation request frame.

In step S22, an AP sends a second frame, in which the second frame is configured to respond to the first frame.

In some embodiments, after receiving the first frame sent by the STA, the AP may send the second frame to the STA to respond to the first frame, that is, to inform the STA that the AP itself has learned relevant information indicated by the first frame.

In some embodiments, the second frame may be a probe response frame, an association response frame, or a reassociation response frame.

In some embodiments, in a case where the first frame includes the first information field and the first information field is located in the channel usage element, the second frame may or may not include the channel usage element. In a case where the second frame includes the channel usage element, the identifier value of the usage mode field in the channel usage element is the first value.

In an example, in a case where the second frame includes the channel usage element and the identifier value of the usage mode field in the channel usage element is the first value, the second frame may include the second information field, that is, include the TWT element field.

A configuration manner of the TWT element field in the second frame is consistent with a configuration manner of the second information field (the TWT element field) in the first frame.

In some embodiments, after receiving the second frame, the STA may further send an acknowledgment frame to the AP, in which the acknowledgment frame is used to inform the AP that the STA has confirmed that the AP knows the relevant information indicated by the first frame, for example, that the STA is subject to the in-device coexistence interference and/or the RU where the STA is subject to the in-device coexistence interference.

In step S23, the STA determines a second RU allocated by the AP, and communicates with the AP according to the second RU.

In some embodiments, after receiving the second frame or after sending the acknowledgment frame to the AP, the STA may determine the second RU allocated by the AP to the STA.

The second RU is used for communication between the STA and the AP.

On this basis, the STA may communicate with the AP according to the second RU allocated by the AP.

In some embodiments, the second RU allocated by the AP within the TWT SP corresponding to one of the at least one TWT element is different from the first RU indicated by the first sub-information field in the one TWT element.

That is, the second RU allocated by the AP within each TWT SP is different from the first RU where the STA is subject to the in-device coexistence interference within the TWT SP. In other words, after receiving the first frame, the AP may determine that the STA is performing other wireless communications on the first RU where the STA is subject to the in-device coexistence interference within each TWT SP, for example, according to the first sub-information field in each of the at least one TWT element in the first frame; and/or, after receiving the first frame, the AP may determine that the first RU where the STA is subject to the in-device coexistence interference within each TWT SP is in the unavailability mode, for example, according to the second sub-information field in each of the at least one TWT element.

In this case, the AP may not allocate to the STA the first RU where the STA is subject to the in-device coexistence interference within each TWT SP, that is, the AP allocates to the STA other RUs except the first RU where the STA is subject to the in-device coexistence interference within each TWT SP, thereby preventing the communication between the STA and the AP from being interfered.

The communication method involved in embodiments of the present disclosure may include at least one of the foregoing steps and embodiments. For example, any one of steps S21 to S23 may be implemented as an independent embodiment, and any combination of steps S21 to S23 may be implemented as an independent embodiment, which is not limited in embodiments of the present disclosure.

FIG. 3 is a first schematic flowchart illustrating a communication method according to embodiments of the present disclosure. As shown in FIG. 3, the communication method is performed by an STA, and includes the following steps.

In step S31, a first frame is determined, in which the first frame includes a first information field, and the first information field indicates that the STA is subject to in-device coexistence interference.

In some embodiments, the first frame may include the first information field, and the first information field indicates that the STA is subject to the in-device coexistence interference.

In some embodiments, the first frame includes a channel usage element, the channel usage element includes a usage mode field, and in a case where an identifier value of the usage mode field is a first value, the usage mode field serves as the first information field, that is, in a case where the identifier value of the usage mode field is the first value, the usage mode field indicates that the STA is subject to the in-device coexistence interference.

In some embodiments, the first frame may further include a second information field, and the second information field indicates an RU where the STA is subject to the in-device coexistence interference, that is, indicates the RU where the STA performs in-device coexistence activities.

For example, in a case where the first frame indicates via the first information field that the STA is subject to the in-device coexistence interference, the first frame further includes the second information field, which indicates the RU where the STA is subject to the in-device coexistence interference.

In some embodiments, the second information field may be a TWT element field.

In some embodiments, the second information field includes at least one TWT element, and each of the at least one TWT element corresponds to one TWT SP.

Each of the at least one TWT element includes at least one of a first sub-information field and a second sub-information field.

The first sub-information field in each of the at least one TWT element indicates a first RU where the STA is subject to the in-device coexistence interference within a TWT SP corresponding to a respective TWT element, that is, indicates the first RU used by the STA in a case of performing the in-device coexistence activities within the TWT SP corresponding to the respective TWT element.

The second sub-information field in each of the at least one TWT element indicates that the first RU where the STA is subject to the in-device coexistence interference is in an unavailability mode within the TWT SP corresponding to a respective TWT element.

As an example, each of the at least one TWT element includes the first sub-information field, in which the first sub-information field indicates the first RU where the STA is subject to the in-device coexistence interference within the TWT SP corresponding to the respective TWT element.

As an example, each of the at least one TWT element includes the second sub-information field, in which the second sub-information field indicates that the first RU where the STA is subject to the in-device coexistence interference is in the unavailability mode within the TWT SP corresponding to the respective TWT element.

In some embodiments, the second information field includes at least one TWT element, each of the at least one TWT element includes an individual TWT parameter set field, and the individual TWT parameter set field includes the first sub-information field.

In an example, the first information field may be an RU index field.

In an example, the first information field may be a reserved bit in the individual TWT parameter set field, or may be shared with other information in the individual TWT parameter set field, for example, sharing a 1-byte length with a TWT channel field in the individual TWT parameter set field.

As an example, the format of the individual TWT parameter set field may be shown as follows:

| | | | | | |
|---|---|---|---|---|---|
| | Request Type | Target Wake Time | ... | TWT Channel/RU Index | .. |
| Octets: | 2 | 0 or 8 | | 1 | |

The individual TWT parameter set field includes the TWT channel field, and the first information (RU index) field shares a 1-byte length with the TWT channel field.

In some embodiments, the second information field includes at least one TWT element, each of the at least one TWT element includes a control field, and the control field includes the second sub-information field.

The content of the first frame is described below as an illustrative example with reference to specific examples.

The first frame includes the channel usage element, the channel usage element includes the usage mode field, and in a case where the identifier value of the usage mode field is the first value, the usage mode field serves as the first information field, that is, indicates that the STA is subject to the in-device coexistence interference.

The first frame includes the TWT element field, the TWT element field includes at least one TWT element, and each of the at least one TWT element includes the individual TWT parameter set field and the control field. The individual TWT parameter set field includes an RU index field that shares a 1-byte length with the TWT channel field, and the RU index field indicates the first RU where the STA is subject to the in-device coexistence interference within the TWT SP corresponding to the TWT element. The control field includes the second sub-information field, and the second sub-information field indicates that the first RU where the STA is subject to the in-device coexistence interference is in the unavailability mode within the TWT SP corresponding to the TWT element.

In some embodiments, the first frame may be a probe request frame, an association request frame, or a reassociation request frame.

In step S32, the first frame is sent.

The communication method involved in embodiments of the present disclosure may include at least one of the foregoing steps and embodiments. For example, any one of steps S31 to S32 may be implemented as an independent embodiment, and a combination of steps S31 to S32 may be implemented as an independent embodiment, which is not limited in embodiments of the present disclosure.

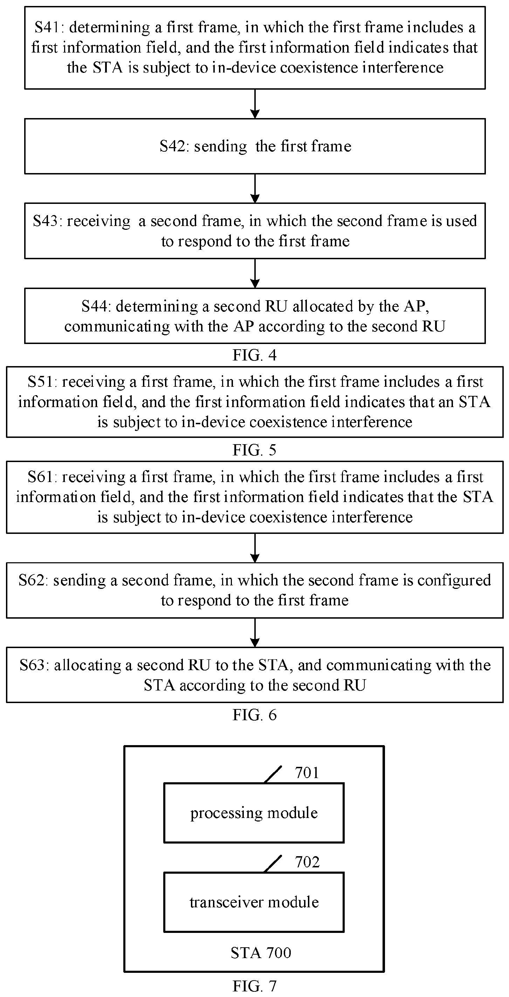

FIG. 4 is a second schematic flowchart illustrating a communication method according to embodiments of the present disclosure. As shown in FIG. 4, the communication method is performed by an STA, and includes the following steps.

In step S41, a first frame is determined, in which the first frame includes a first information field, and the first information field indicates that the STA is subject to in-device coexistence interference.

In some embodiments, for the implementation of step S41, reference may be made to the implementation shown in step S31 in FIG. 3, which is not repeated herein.

In step S42, the first frame is sent.

In some embodiments, for the implementation of step S42, reference may be made to the implementation shown in step S32 in FIG. 3, which is not repeated herein.

In step S43, a second frame sent by an AP is received, in which the second frame is used to respond to the first frame.

In some embodiments, after receiving the first frame sent by the STA, the AP may send the second frame to the STA to respond to the first frame, that is, to inform the STA that the AP itself has learned relevant information indicated by the first frame. Based on this, after the STA sends the first frame, the STA may receive the second frame sent by the AP.

In some embodiments, the second frame may be a probe response frame, an association response frame, or a reassociation response frame.

In some embodiments, in a case where the first frame includes the first information field and the first information field is located in the channel usage element, the second frame may or may not include the channel usage element. In a case where the second frame includes the channel usage element, the identifier value of the usage mode field in the channel usage element is the first value.

In an example, in a case where the second frame includes the channel usage element and the identifier value of the usage mode field in the channel usage element is the first value, the second frame may include the second information field, that is, include the TWT element field.

A configuration manner of the TWT element field in the second frame is consistent with a configuration manner of the second information field (the TWT element field) in the first frame.

In some embodiments, after receiving the second frame, the STA may further send an acknowledgment frame to the AP, in which the acknowledgment frame is used to inform the AP that the STA has confirmed that the AP knows the relevant information indicated by the first frame, for example, that the STA is subject to the in-device coexistence interference and/or the RU where the STA is subject to the in-device coexistence interference.

In step S44, a second RU allocated by the AP is determined, and the STA communicates with the AP according to the second RU.

In some embodiments, after receiving the second frame or after sending the acknowledgment frame to the AP, the STA may determine the second RU allocated by the AP to the STA.

The second RU is used for communication between the STA and the AP.

On this basis, the STA may communicate with the AP according to the second RU allocated by the AP.

In some embodiments, the second RU allocated by the AP within the TWT SP corresponding to one of the at least one TWT element is different from the first RU indicated by the first sub-information field in the one TWT element.

That is, the second RU allocated to the STA by the AP and obtained by the STA is an RU except the first RU where the STA is subject to the in-device coexistence interference within each TWT SP, such that in a case where the STA communicates with the AP according to the second RU, the communication between the STA and the AP may be prevented from being interfered.

The communication method involved in embodiments of the present disclosure may include at least one of the foregoing steps and embodiments. For example, any one of steps S41 to S44 may be implemented as an independent embodiment, and any combination of steps S41 to S44 may be implemented as an independent embodiment, which is not limited in embodiments of the present disclosure.

FIG. 5 is a third schematic flowchart illustrating a communication method according to embodiments of the present disclosure. As shown in FIG. 5, the communication method is performed by an AP, and includes the following steps.

In step S51, a first frame is received, in which the first frame includes a first information field, and the first information field indicates that an STA is subject to in-device coexistence interference.

In some embodiments, the first frame may include the first information field, and the first information field indicates that the STA is subject to the in-device coexistence interference.

In some embodiments, the first frame includes a channel usage element, the channel usage element includes a usage mode field, and in a case where an identifier value of the usage mode field is a first value, the usage mode field serves as the first information field, that is, in a case where the identifier value of the usage mode field is the first value, the usage mode field indicates that the STA is subject to the in-device coexistence interference.

In some embodiments, the first frame may further include a second information field, and the second information field indicates an RU where the STA is subject to the in-device coexistence interference, that is, indicates the RU where the STA performs in-device coexistence activities.

For example, in a case where the first frame indicates via the first information field that the STA is subject to the in-device coexistence interference, the first frame further includes the second information field, which indicates the RU where the STA is subject to the in-device coexistence interference.

In some embodiments, the second information field may be a TWT element field.

In some embodiments, the second information field includes at least one TWT element, and each of the at least one TWT element corresponds to one TWT SP.

Each of the at least one TWT element includes at least one of a first sub-information field and a second sub-information field.

The first sub-information field in each of the at least one TWT element indicates a first RU where the STA is subject to the in-device coexistence interference within a TWT SP corresponding to a respective TWT element, that is, indicates the first RU used by the STA in a case of performing the in-device coexistence activities within the TWT SP corresponding to the respective TWT element.

The second sub-information field in each of the at least one TWT element indicates that the first RU where the STA is subject to the in-device coexistence interference is in an unavailability mode within the TWT SP corresponding to a respective TWT element.

As an example, each of the at least one TWT element includes the first sub-information field, in which the first sub-information field indicates the first RU where the STA is subject to the in-device coexistence interference within the TWT SP corresponding to the respective TWT element.

As an example, each of the at least one TWT element includes the second sub-information field, in which the second sub-information field indicates that the first RU where the STA is subject to the in-device coexistence interference is in the unavailability mode within the TWT SP corresponding to the respective TWT element.

In some embodiments, the second information field includes at least one TWT element, each of the at least one TWT element includes an individual TWT parameter set field, and the individual TWT parameter set field includes the first sub-information field.

In an example, the first information field may be an RU index field.

In an example, the first information field may be a reserved bit in the individual TWT parameter set field, or may be shared with other information in the individual TWT parameter set field, for example, sharing a 1-byte length with a TWT channel field in the individual TWT parameter set field.

As an example, the format of the individual TWT parameter set field may be shown as follows:

| | | | | | |
|---|---|---|---|---|---|
| | Request Type | Target Wake Time | ... | TWT Channel/RU Index | .. |
| Octets: | 2 | 0 or 8 | | 1 | |

The individual TWT parameter set field includes the TWT channel field, and the first information (RU index) field shares a 1-byte length with the TWT channel field.

In some embodiments, the second information field includes at least one TWT element, each of the at least one TWT element includes a control field, and the control field includes the second sub-information field.

The content of the first frame is described below as an illustrative example with reference to specific examples.

The first frame includes the channel usage element, the channel usage element includes the usage mode field, and in a case where the identifier value of the usage mode field is the first value, the usage mode field serves as the first information field, that is, indicates that the STA is subject to the in-device coexistence interference.

The first frame includes the TWT element field, the TWT element field includes at least one TWT element, and each of the at least one TWT element includes the individual TWT parameter set field and the control field. The individual TWT parameter set field includes an RU index field that shares a 1-byte length with the TWT channel field, and the RU index field indicates the first RU where the STA is subject to the in-device coexistence interference within the TWT SP corresponding to the TWT element. The control field includes the second sub-information field, and the second sub-information field indicates that the first RU where the STA is subject to the in-device coexistence interference is in the unavailability mode within the TWT SP corresponding to the TWT element.

In some embodiments, the first frame may be a probe request frame, an association request frame, or a reassociation request frame.

FIG. 6 is a fourth schematic flowchart illustrating a communication method according to embodiments of the present disclosure. As shown in FIG. 6, the communication method includes the following steps.

In step S61, a first frame is received, in which the first frame includes a first information field, and the first information field indicates that the STA is subject to in-device coexistence interference.

In some embodiments, for the implementation of step S61, reference may be made to the implementation shown in step S51 in FIG. 5, which is not repeated herein.

In step S62, a second frame is sent, in which the second frame is configured to respond to the first frame.

In some embodiments, after receiving the first frame sent by the STA, the AP may send the second frame to the STA to respond to the first frame, that is, to inform the STA that the AP itself has learned relevant information indicated by the first frame.

In some embodiments, the second frame may be a probe response frame, an association response frame, or a reassociation response frame.

In some embodiments, in a case where the first frame includes the first information field and the first information field is located in the channel usage element, the second frame may or may not include the channel usage element. In a case where the second frame includes the channel usage element, the identifier value of the usage mode field in the channel usage element is the first value.

In an example, in a case where the second frame includes the channel usage element and the identifier value of the usage mode field in the channel usage element is the first value, the second frame may include the second information field, that is, include the TWT element field.

A configuration manner of the TWT element field in the second frame is consistent with a configuration manner of the second information field (the TWT element field) in the first frame.

In some embodiments, after sending the second frame to the STA, the AP may further receive an acknowledgment frame sent by the STA. The acknowledgment frame is used to inform the AP that the STA has confirmed that the AP knows the relevant information indicated by the first frame, for example, that the STA is subject to the in-device coexistence interference and/or the RU where the STA is subject to the in-device coexistence interference.

In step S63, a second RU is allocated to the STA, and the AP communicates with the STA according to the second RU.

In some embodiments, after the AP sends the second frame or receives the acknowledgment frame sent by the STA, the AP may allocate the second RU to the STA, and communicate with the STA according to the second RU.

The second RU is used for communication between the STA and the AP.

In some embodiments, the second RU allocated by the AP within the TWT SP corresponding to one of the at least one TWT element is different from the first RU indicated by the first sub-information field in the one TWT element.

That is, the second RU allocated by the AP within each TWT SP is different from the first RU where the STA is subject to the in-device coexistence interference within the TWT SP. In other words, after receiving the first frame, the AP may determine that the STA is performing other wireless communications on the first RU where the STA is subject to the in-device coexistence interference within each TWT SP, for example, according to the first sub-information field in each of the at least one TWT element in the first frame; and/or, after receiving the first frame, the AP may determine that the first RU where the STA is subject to the in-device coexistence interference within each TWT SP is in the unavailability mode, for example, according to the second sub-information field in each of the at least one TWT element.

In this case, the AP may not allocate to the STA the first RU where the STA is subject to the in-device coexistence interference within each TWT SP, that is, the AP allocates to the STA other RUs except the first RU where the STA is subject to the in-device coexistence interference within each TWT SP, thereby preventing the communication between the STA and the AP from being interfered.

The communication method involved in embodiments of the present disclosure may include at least one of the foregoing steps and embodiments. For example, any one of steps S61 to S63 may be implemented as an independent embodiment, and any combination of steps S61 to S63 may be implemented as an independent embodiment, which is not limited in embodiments of the present disclosure.

FIG. 7 is a block diagram illustrating an STA provided in embodiments of the present disclosure. As shown in FIG. 7, the STA 700 may include: a processing module 701 and a transceiver module 702.

In some embodiments, the processing module 701 is configured to determine a first frame, in which the first frame includes a first information field, and the first information field indicates that the STA is subject to in-device coexistence interference. The transceiver module 702 is configured to send the first frame.

In an example, the processing module 701 is configured to execute at least one of the processing steps performed by the STA in any of the foregoing methods (for example, but not limited to, step S31 and step S41), which is not repeated herein.

In an example, the transceiver module 702 is configured to execute at least one of the transceiving steps performed by the STA in any of the foregoing methods (for example, but not limited to, step S21, step S23, step S32, and step S42 to step S44), which is not repeated herein.

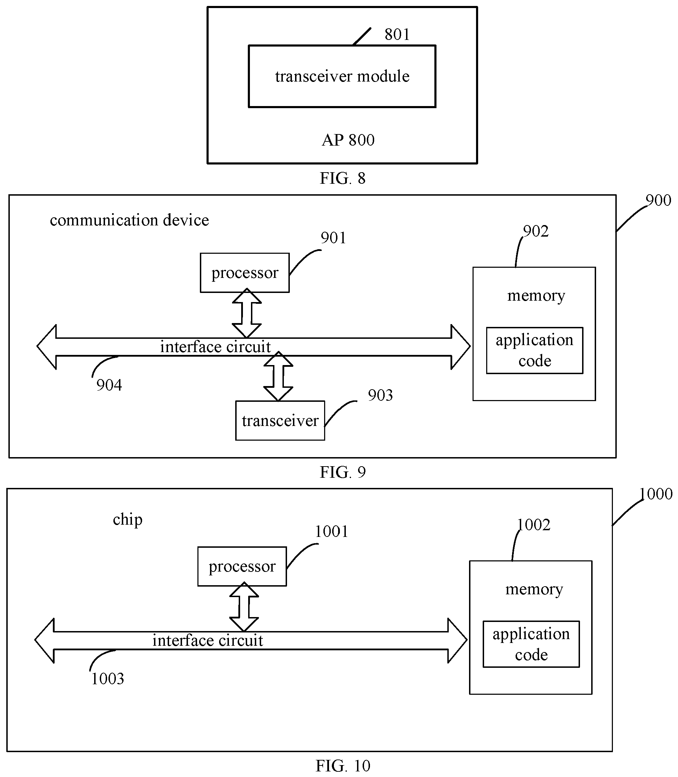

FIG. 8 is a block diagram illustrating an AP provided in embodiments of the present disclosure. As shown in FIG. 8, the AP 800 may include a transceiver module 801.

In some embodiments, the transceiver module 801 is configured to receive a first frame, in which the first frame includes a first information field, and the first information field indicates that an STA is subject to in-device coexistence interference.

In an example, the transceiver module 801 is configured to execute at least one of the transceiving steps performed by the AP in any of the foregoing methods (for example, but not limited to, step S22, step S51, and step S61 to step S63), which is not repeated herein.

It should be understood that the division of each unit or module in the above device is only a division of logical functions, which may be fully or partially integrated into a physical entity or physically separated in actual implementation. Moreover, the units or modules in the device may be implemented in a form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 9 is a block diagram illustrating a communication device provided in embodiments of the present disclosure. The communication device 900 may be an STA or an AP, or may be a chip, a chip system, a processor or the like that supports an STA or an AP to implement any of the foregoing methods. The communication device may be used to implement the methods described in the above method embodiments, and for details, reference may be made to the descriptions in the above method embodiments.

As shown in FIG. 9, the communication device 900 includes one or more processors 901. The processor 901 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. Optionally, the communication device 900 is configured to perform any one of the above methods.

In some embodiments, the communication device 900 further includes one or more transceivers 902 for storing instructions. Optionally, all or part of the memories 902 may also be located outside the communication device 900.

In some embodiments, the communication device 900 further includes one or more transceivers 903. in a case where the communication device 900 includes one or more transceivers 903, the transceiver 903 is configured to perform at least one of the communication steps such as sending and/or receiving in the foregoing methods (for example, but not limited to, step S21 to step S23, step S32, step S42 to step S44, step S51, step S61 to step S63), and the processor 901 is configured to perform at least one of the other steps (for example, but not limited to, step S31 and step S41).

In some embodiments, the transceiver may include a receiver and/or a transmitter, which may be separate or integrated. Optionally, terms such as transceiver, transceiver unit, transceiving machine, transceiver circuit and the like may be replaced with each other, terms such as transmitter, transmitting unit, transmitting machine, transmitting circuit and the like may be replaced with each other, and terms such as receiver, receiving unit, receiving machine, receiving circuit and the like may be replaced with each other.

In some embodiments, the communication device 900 further includes one or more interface circuits 904. Optionally, the interface circuit 904 is connected to the memory 902. The interface circuit 904 may be used to receive signals from the memory 902 or other devices, and may be used to send signals to the memory 902 or other devices. For example, the interface circuit 904 may read instructions stored in the memory 902 and send the instructions to the processor 901.

The communication device 900 described in the above embodiments may be an STA or an AP, but the scope of the communication device 900 described in the present disclosure is not limited thereto. The structure of the communication device 900 may not be limited by FIG. 10. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 10 is a block diagram illustrating a chip 1000 in embodiments of the present disclosure. The chip 1000 includes one or more processors 1001, and the chip 1000 is configured to perform any of the above methods.

In some embodiments, the chip 1000 further includes one or more interface circuits 1003. Optionally, the interface circuit 1003 is connected to the memory 1002. The interface circuit 1003 may further be configured to receive a signal from the memory 1002 or other devices, and the interface circuit 1003 may be configured to send a signal to the memory 1002 or other devices. For example, the interface circuit 1003 may read instructions stored in the memory 1002 and send the instructions to the processor 1001.

In some embodiments, the interface circuit 1003 is configured to perform at least one of the communication steps such as sending and/or receiving in the foregoing methods (for example, but not limited to, step S21 to step S23, step S32, step S42 to step S44, step S51, step S61 to step S63), and the processor 1001 is configured to perform at least one of the other steps (for example, but not limited to, step S31 and step S41).

In some embodiments, terms such as interface circuit, interface, transceiver pin, transceiver and the like may be replaced with each other.

In some embodiments, the chip 1000 further includes one or more memories 1002 for storing instructions. Optionally, all or part of the memories 1002 may be located outside the chip 1000.

The present disclosure further provides a storage medium on which instructions are stored, which, when executed on the communication device 900, cause the communication device 900 to perform any of the above methods. For example, the storage medium is an electronic storage medium. For example, the storage medium is a computer-readable storage medium, but it is not limited to this, and it may also be a storage medium readable by other devices. For example, the storage medium may be a non-transitory storage medium, but it is not limited to this, and it may also be a temporary storage medium.

The present disclosure further provides a program product which, when executed by the communication device 900, causes the communication device 900 to perform any of the above methods. Optionally, the program product is a computer program product.

The present disclosure further provides a computer program that, when run on a computer, causes the computer to perform any of the above methods. The above description is only a preferred embodiment of the present disclosure and an illustration of the technical principles used. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or their equivalent features without departing from the above-mentioned concepts of the present disclosure. For example, the above-mentioned features are replaced with the technical features with similar functions disclosed in the present disclosure (but not limited to this) to form a technical solution.

## Claims

1. A communication method, applied to a station (STA), comprising:
determining a first frame, wherein the first frame comprises a first information field, and the first information field indicates that the STA is subject to in-device coexistence interference; and
sending the first frame.

2. The method according to claim 1, wherein the first frame further comprises a second information field, and the second information field indicates a resource unit (RU) where the STA is subject to the in-device coexistence interference.

3. The method according to claim 1 or 2, wherein the first frame comprises a channel usage element, the channel usage element comprises a usage mode field, and in a case where an identifier value of the usage mode field is a first value, the usage mode field serves as the first information field, and the first value indicates that the STA is subject to the in-device coexistence interference.

4. The method according to claim 2, wherein the second information field comprises at least one target wake time (TWT) element, and each of the at least one TWT element comprises at least one of:
a first sub-information field, wherein the first sub-information field indicates a first RU where the STA is subject to the in-device coexistence interference within a TWT service period (SP) corresponding to a respective TWT element; or
a second sub-information field, wherein the second sub-information field indicates that the first RU is in an unavailability mode within the TWT SP corresponding to a respective TWT element.

5. The method according to claim 4, wherein each of the at least one TWT element comprises an individual TWT parameter set field and a control field, the individual TWT parameter set field comprises the first sub-information field, and the control field comprises the second sub-information field.

6. The method according to claim 1, further comprising:
receiving a second frame, wherein the second frame is used to respond to the first frame.

7. The method according to claim 4, further comprising:
determining a second RU allocated by an access point (AP), and communicating with the AP according to the second RU,
wherein the second RU allocated by the AP within the TWT SP corresponding to one of the at least one TWT element is different from the first RU indicated by the first sub-information field in the one TWT element.

8. A communication method, applied to an access point (AP), comprising:
receiving a first frame, wherein the first frame comprises a first information field, and the first information field indicates that a station (STA) is subject to in-device coexistence interference.

9. The method according to claim 8, wherein the first frame further comprises a second information field, and the second information field indicates a resource unit (RU) where the STA is subject to the in-device coexistence interference.

10. The method according to claim 8 or 9, wherein the first frame comprises a channel usage element, the channel usage element comprises a usage mode field, and in a case where an identifier value of the usage mode field is a first value, the usage mode field serves as the first information field, and the first value indicates that the STA is subject to the in-device coexistence interference.

11. The method according to claim 9, wherein the second information field comprises at least one target wake time (TWT) element, and each of the at least one TWT element comprises at least one of:
a first sub-information field, wherein the first sub-information field indicates a first RU where the STA is subject to the in-device coexistence interference within a TWT service period (SP) corresponding to a respective TWT element; or
a second sub-information field, wherein the second sub-information field indicates that the first RU is in an unavailability mode within the TWT SP corresponding to a respective TWT element.

12. The method according to claim 11, wherein each of the at least one TWT element comprises an individual TWT parameter set field and a control field, the individual TWT parameter set field comprises the first sub-information field, and the control field comprises the second sub-information field.

13. The method according to claim 8, further comprising:
sending a second frame, wherein the second frame is used to respond to the first frame.

14. The method according to claim 11, further comprising:
allocating a second RU to the STA, and communicating with the STA according to the second RU,
wherein the second RU allocated by the AP within the TWT SP corresponding to one of the at least one TWT element is different from the first RU indicated by the first sub-information field in the one TWT element.

15. A station (STA), comprising:
a processing module configured to determine a first frame, wherein the first frame comprises a first information field, and the first information field indicates that the STA is subject to in-device coexistence interference; and
a transceiver module configured to send the first frame.

16. An access point (AP), comprising:
a transceiver module configured to receive a first frame, wherein the first frame comprises a first information field, and the first information field indicates that a station (STA) is subject to in-device coexistence interference.

17. A communication device, comprising:
one or more processors,
wherein the communication device is configured to perform the communication method according to any one of claims 1 to 7 or claims 8 to 14.

18. A storage medium storing instructions that, when executed on a communication device, cause the communication device to perform the communication method according to any one of claims 1 to 7 or claims 8 to 14.
